# FASCICULE DE BREVET EUROPEEN

(11) **EP 0 575 237 B1**
(45) Date de publication et mention de la délivrance du brevet: **09.05.2001**
(21) Numéro de dépôt: 93401521.5
(22) Date de dépôt: 14.06.1993
(51) Int. Cl.: G06F 13/12, G06F 9/46

(54) **Système de transmission de données entre un bus d'ordinateur et une mémoire de masse**
Anordnung zur Datenübertragung zwischen einem Computer-Bus und einem Massenspeicher
System for data transmission between a computer bus and a backing store

(30) Priorité: 15.06.1992 FR 9207208
(43) Date de publication de la demande: 22.12.1993
(73) Titulaire: BULL S.A., 78430 Louveciennes (FR)
(72) Inventeur: Sala, Patrick, F-78440 Procheville (FR)

(56) Documents cités:
- EP-A- 0 481 896
- US-A- 4 060 849
- ELECTRONIC DESIGN vol. 35, no. 15, 25 Juin 1987, HASBROUCK HEIGHTS, NJ, US pages 77 - 82 B. MOREN 'Link Multibus II and SCSI devices with smart adapter'

## Description

La présente invention concerne un système de transmission de données entre un bus d'ordinateur et une mémoire de masse. Elle est plus particulièrement applicable à une mémoire de masse comportant une pluralité de mémoires à disques et/ou dérouleurs de bandes magnétiques, ces unités étant reliées entre elles par une liaison spécifique normalisée à laquelle le système est relié physiquement.

Les liaisons de transmission utilisées pour les mémoires de masse comportant des mémoires à disques ou des dérouleurs de bandes sont les liaisons de type SCSI, normalisées aussi bien à l'ANSI qu'à l'I.S.O. (ces deux sigles signifient respectivement American National Standard Institute et International standard organization).

Le support physique de transmission de la liaison est constitué par un bus supportant deux types de mémoires, à savoir, d'une part les mémoires à disques magnétiques et d'autre part, les dérouleurs de bandes magnétiques.

Sur un même bus de type SCSI, on peut connecter, selon la norme, jusqu'à 6 unités périphériques, que ce soient des mémoires à disques ou des dérouleurs de bandes.

Une autre caractéristique de la norme SCSI est la suivante : lorsque une unité périphérique a reçu des commandes d'exécution de la part du système de transmission, consistant soit à inscrire des données sur les supports d'enregistrement magnétique qu'elles contiennent, soit à les lire, ces unités peuvent se déconnecter du canal physique auquel elles sont reliées et effectuer leur travail indépendamment de toute liaison avec l'extérieur.

Sur un bus de type SCSI, les messages d'informations sont constitués d'une pluralité de trames constituées chacune de données utiles encadrées dans le temps par des caractères de commande et par des messages d'état communément appelés status placés respectivement en tête et queue de trame.

Par ailleurs, on sait que l'ensemble des éléments constitutifs fonctionnels d'un ordinateur, qu'il s'agisse des processeurs, des mémoires, ou encore des contrôleurs d'entrée/sortie de périphériques sont disposés sur un ensemble de cartes à dimensions normalisées. Ces dernières sont reliées à un même bus de type généralement parallèle assurant les communications entre les différents processeurs et le transport de données entre les cartes, ainsi que l'alimentation électrique de ces dernières.

L'un des bus les plus couramment utilisé est le multibus II (marque déposée par la Société INTEL), dont l'architecture est structurée autour d'un bus principal de type parallèle, communément appelé PSB (ce qui signifie Parallel system Bus) et normalisé suivant la norme IEEE 1296 (Institute of Electrical and Electronic Engineers).

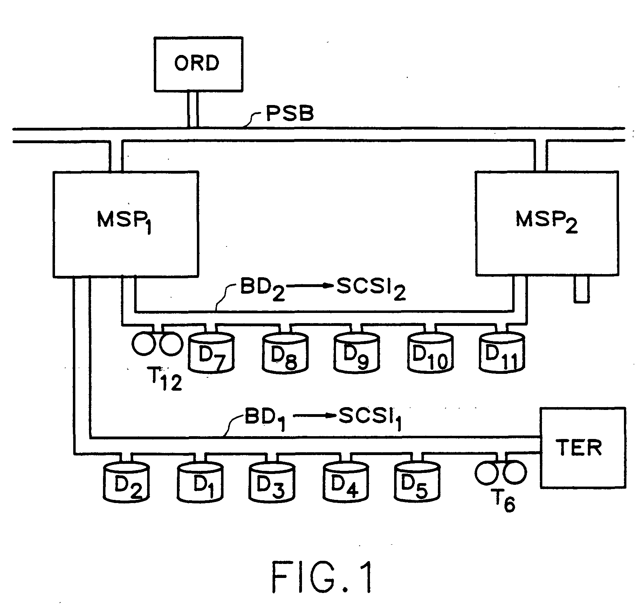

Ainsi qu'on peut le voir à la figure 1, un tel bus d'ordinateur PSB est relié, à deux liaisons de type SCSI, symbolisées par les deux bus BD₁ et BD₂, au moyen d'un dispositif passerelle de connexion, ou encore système de transmission de données, dont la fonction est d'adapter les conditions de transmission des informations sur PSB, aux conditions de transmission sur les deux bus BD₁-BD₂ de liaison SCSI. En effet, les modes de transmission des données, d'une part sur PSB et d'autre part sur les deux bus BD₁ ou BD₂ sont totalement différents, aussi bien en ce qui concerne le débit de transmission des informations, qu'en ce qui concerne les protocoles de transmission utilisés, les codes d'écriture, les informations, le format, les caractères de commande, etc.

La figure 1 montre deux systèmes de transmission de données MSP₁, MSP₂. Le premier d'entre eux, MSP₁ est connecté à PSB d'une part et d'autre part aux deux bus BD₁ et BD₂.

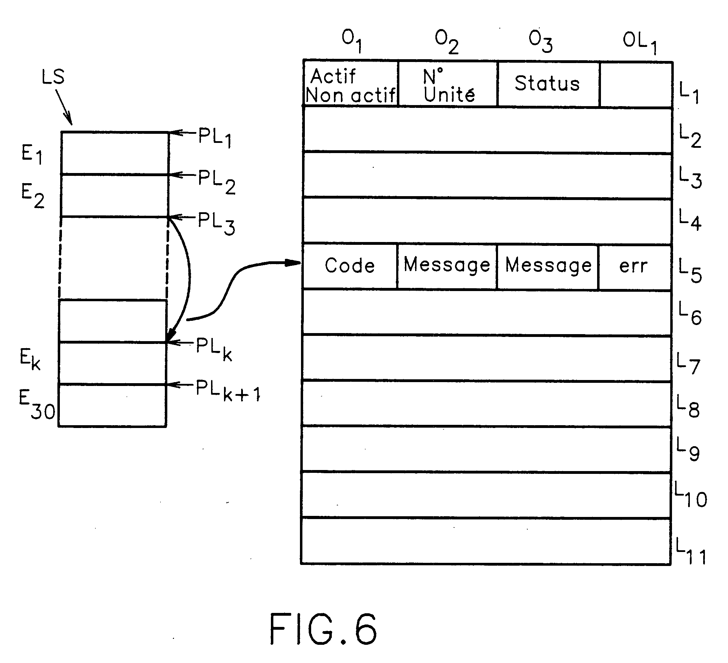

Par ailleurs, le second système de transmission de données MSP₂ est connecté seulement au bus BD₂. Dans l'exemple de réalisation montré à la figure 1, 6 unités de stockage de données sont connectées au bus BD₁, à savoir les 5 unités de mémoire à disques D₁ à D₅ et le dérouleur T₆. Le bus BD₂ est connecté aux 5 mémoires à disques D₇ à D₁₁ et au dérouleur de bandes D₁₂. Le bus BD₁ n'étant connecté qu'au seul système de transmission de données MSP₁, il comporte en son extrémité un bouchon terminateur TER, voisin du dérouleur de bande T₆ à la figure 1.

Il va de soi que le bus PSB est connecté à un ordinateur ORD.

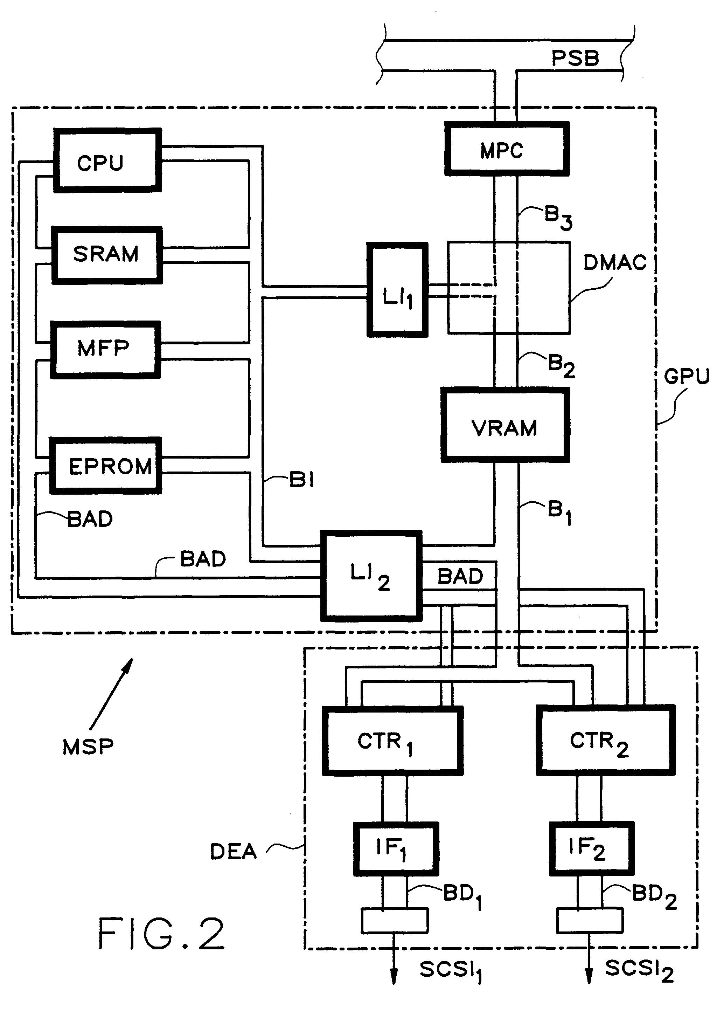

La structure physique générale d'un système de transmission de donnée (ou dispositif passerelle de connexion) qui est rappelée à la figure 2 est décrite plus en détail, ainsi que ses divers modes de réalisation et de fonctionnement dans l'une et l'autre des demandes de brevet N° 91 08908 déposée le 15.07.91 par la demanderesse sous le titre "dispositif universel de couplage d'un bus d'ordinateur à un contrôleur d'un groupe de périphériques" (EP 0 524 070 A), et N° 91 08907 déposée le même jour par la même compagnie sous le titre "système d'exploitation pour dispositif universel de couplage d'un bus d'ordinateur à une liaison spécifique d'un réseau" (EP 0 524 071 A).

Un tel système de transmission de données MSP se compose de deux parties à savoir d'une part un dispositif universel de couplage GPU (sigle anglais de General Purpose Unit) et d'un dispositif adaptateur DEA.

Le dispositif GPU est relié à PSB par un coprocesseur MPC, par exemple VL 82c389 fabriqué par la Société INTEL, lequel communique par mode message avec l'ordinateur ORD, ce mode étant défini dans la norme précitée IEEE 1296.

Le dispositif DEA est relié physiquement au deux bus BD₁ et BD₂ auxquels sont connectés respectivement les différentes unités de stockage indiquées à la figure 1. L'ensemble des disques D₁ à D₅ et le dérouleur de bande D₆ forme le système de mémoire de masse SCSI₁, alors que les autres disques D₇ à D₁₁ et le dérouleur de bandes D₁₂ forment le système de mémoire de masse SCSI₂.

Le dispositif GPU comprend les différents éléments constitutifs essentiels suivants :
- le coprocesseur MPC déjà cité,
- le microprocesseur CPU constituant de fait l'unité centrale du dispositif GPU, muni d'un bus interne BI pour le transport des commandes et des instructions destinées aux différentes unités de stockage composant les systèmes SCSI₁ et SCSI₂, et d'autre part d'un bus d'adresse BAD transportant les adresses relatives à ces différentes commandes. Ce microprocesseur est associé respectivement à une mémoire programmable effaçable EPROM, une mémoire vive SRAM et un gestionnaire d'interruption à savoir MFP. Tous ces éléments EPROM, SRAM, MFP sont tous connectés au bus interne BI et au bus d'adresse BAD,
- la mémoire de type vidéo-RAM à double port désignée par VRAM,
- le contrôleur d'accès direct mémoire DMAC, connecté d'une part au bus B₂ reliant ce contrôleur à la mémoire VRAM et d'autre part au bus B₃ le reliant au coprocesseur MPC,
- le bus B₁ qui relie la mémoire VRAM au dispositif adaptateur DEA dont les éléments constitutifs seront décrits par la suite.

Le microprocesseur CPU est, dans l'exemple de réalisation décrit ici, de type 68020 fabriqué par la Firme MOTOROLA. Le bus interne BI est un bus non multiplexé de 32 bits, alors que le bus BAD est sur 32 bits d'adresse.

La mémoire morte effaçable EPROM a par exemple une capacité de 128 ou 256 Kilo-octets et elle contient les programmes d'auto-tests et d'initialisation de GPU.

Le système d'exploitation du microprocesseur CPU (operating System) désigné par GPOS (sigle anglais de General Purpose Operating system) est contenu dans la mémoire statique SRAM et est chargé à l'initialisation du dispositif de couplage GPU. La capacité de cette mémoire est 512 Kilo-octets ou 1 Méga-octets par exemple. Il est décrit dans la demande 91 08907 précitée.

On voit à la figure 2 que le contrôleur d'accès direct DMAC est connecté en série d'une part entre la mémoire VRAM et le coprocesseur MPC et d'autre part entre ce dernier et le bus BI du microprocesseur CPU.

Une description détaillée de la structure et du fonctionnement du contrôleur DMAC est donnée dans la demande de brevet français 91 15814 déposée le 19.12.91 par la compagnie demanderesse sous le titre "Contrôleur de transfert multiple de données entre une pluralité de mémoires et un bus d'ordinateur" (EP 0 547 976 A).

Le système d'exploitation ici désigné par GPOS organise le fonctionnement d'ensemble du microprocesseur et par conséquent supervise le transfert des trames provenant de l'ordinateur ORD (ou de l'un ou l'autre des systèmes SCSI₁, SCSI₂) depuis le bus PSB jusqu'à la mémoire VRAM et réciproquement. Par ailleurs, le programme d'adaptation des protocoles utilisés d'une part entre l'ordinateur ORD et le dispositif de couplage via le bus PSB, et d'autre part sur la liaison de type SCSI est contenue par exemple dans la mémoire SRAM.

Le microprocesseur CPU est donc le cerveau du dispositif de couplage GPU : il initialise le transfert des données, réalise l'adaptation des protocoles, met en oeuvre son système d'exploitation et transfère les données entre DEA et l'ordinateur ORD et réciproquement tout en dialoguant avec DEA avec lequel il échange des commandes et des status par exemple de la manière qui sera décrite plus loin.

La description détaillée du rôle et du fonctionnement des autres éléments du dispositif de couplage est effectuée dans les trois demandes de brevet précitées.

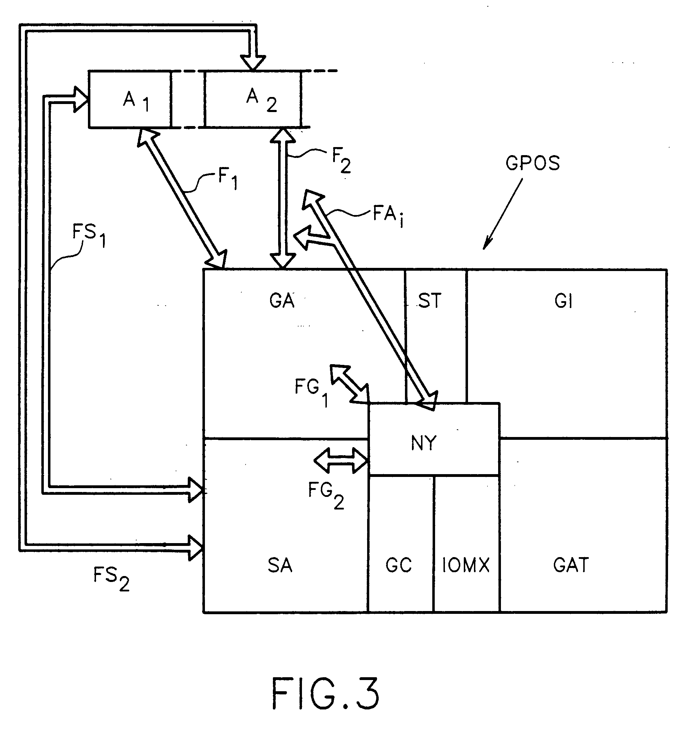

Les éléments constitutifs essentiels du système d'exploitation GPOS du dispositif universel de couplage GPU sont rappelés à la figure 3.

Le système d'exploitation GPOS est constitué du noyau central NY assurant les fonctions de base du système entouré d'une pluralité de gestionnaires assurant chacun une fonction spécifique. Ces gestionnaires sont le gestionnaire d'application GA, le serveur d'intercommunication SA, le gestionnaire d'incidents GI, le starter ST, le gestionnaire de commande GC, le gestionnaire d'accès à terminal GAT, le metteur au point interactif IOMX.

Autour de ce système d'exploitation gravitent des applications qui lui sont de fait associées, chacune de celles-ci communiquant et dialoguant avec le noyau central NY et tout ou partie des gestionnaires entourant ce dernier. Les applications sont autonomes et indépendantes entre elles. Dans le système de transmission de données selon l'invention, ces applications sont au nombre de deux et désignées par A₁ et A₂.

Dans l'exemple de réalisation de l'invention décrit ici, l'application A₁ est relative au système de mémoire de masse SCSI₁, alors que l'application A₂ est relative au système de mémoire de masse SCSI₂. Le rôle de chaque application consiste d'une part à effectuer le transfert des données dans les deux sens entre la mémoire VRAM et chacune des mémoires à disques et dérouleurs de bandes appartenant à SCSI₁ ou SCSI₂ où ces données doivent être écrites ou lues et d'autre part à transférer les commandes d'écriture ou de lecture relative à ces mêmes données vers ces mêmes mémoires à disques et dérouleurs.

Les éléments essentiels du système d'exploitation GPOS sont le noyau NY, le gestionnaire d'application GA et le serveur d'intercommunication SA. Les autres gestionnaires ne seront pas décrits davantage ici. Leurs rôles est plus abondamment décrit dans la demande de brevet 91 08907 précitée.

Le noyau NY effectue la gestion de base du système en gérant et organisant en temps réel le travail des deux applications A₁ et A₂, lorsque l'une et/ou l'autre est en train de tourner.

Il répond aux demandes des gestionnaires qui l'entourent quand ceux-ci lui demande un service, mais ne prend aucune initiative. Il gère également l'activation des processus composant chacune des applications A₁ et A₂.

Le gestionnaire GA surveille et définit l'état dans lequel doit se trouver l'un ou l'autre des applications A₁, A₂.

Ces états sont au nombre de cinq et désignés par E₀ à E₅.

L'état E₀ signifie que le service offert par l'application n'est pas disponible.

L'état E₁ est l'état par lequel on lance l'application, et est en particulier celui où on effectue les opérations d'initialisation de tous les processus constituant l'application et de toutes les tables qui lui correspondent.

L' état E₂ est le plus fréquent et est celui dans lequel l'application est en train de tourner.

L'état E₃ est l'état où l'application est en train de se terminer ou encore en train d'avorter.

L'état E₅ est l'état pour lequel l'application est interrompue pour une faute ou une erreur.

De plus amples détails sur chacun de ces états sont donnés dans la demande 91 08907 précitée.

Le serveur d'intercommunication pour applications SA permet à chacune d'entre elles de communiquer avec une autre quand cela s'avère nécessaire. Ainsi qu'il a été dit plus haut, chacune des applications étant autonome et indépendante par rapport aux autres, elles ne peuvent communiquer entre elles, que par l'intermédiaire de ce serveur SA.

les différents éléments de GPOS communiquent entre eux et avec A₁ et A₂ par des appels moniteur symbolisés par les flèches FAᵢ (entre NY et A₁-A₂), FG₁-FG₂ (entre NY et GA-SA) F₁-F₂ (entre GA et A₁-A₂) FS₁-FS₂ (entre SA et A₁-A₂), ces appels étant également plus amplement décrits dans la demande 91 08907 précitée.

La présente invention définit le rôle et le fonctionnement de l'une ou l'autre des applications A₁ et A₂ dans le cadre du système de transmission de données auxquelles, de par leur association avec le système d'exploitation GPOS, elles appartiennent.

Selon l'invention, le système de transmission de données entre un bus d'ordinateur et une mémoire de masse comportant une pluralité d'unité de stockage de données reliées entre elles par une liaison spécifique à laquelle le système est-relié physiquement comprenant :
- un microprocesseur central relié à au moins une mémoire contenant un système d'exploitation destiné à être exécuté par celui-ci,
- des moyens de transfert de trames depuis le bus d'ordinateur vers la liaison et réciproquement, dont le travail est organisé et géré par le microprocesseur, comprenant une mémoire de stockage de données disposée entre le bus et la liaison,
caractérisé en ce que, il comporte au moins un microprocesseur d'entrée/sortie esclave du processeur central relié d'une part à la dite mémoire et d'autre part à la dite liaison, l'application comprenant :
- un processus d'initialisation de l'ensemble de l'application,
- une pluralité de processus d'adaptation distincts et indépendants les uns des autres dont chacun est associé à une unité de stockage d'un type déterminé,
- au moins un processus gestionnaire de tâches, les différents processus communiquant entre eux par sémaphore à message, chacun des processus d'adaptation réalisant la transformation et l'adaptation des commandes provenant de l'ordinateur (ORD) destinées à l'unité de stockage correspondante en commandes conformes au protocole utilisé sur la liaison spécifique, le processus gestionnaire autorisant le microprocesseur d'entrée/sortie à transfèrer physiquement les commandes et les données des trames correspondant à celles-ci depuis la mémoire vers la liaison et réciproquement, dès que le processus d'adaptation correspondant à terminé la dite adaptation.

D'autres caractéristiques et avantages de la présente invention apparaitront dans la description suivante donnée à titre d'exemple non limitatif et en se référant aux dessins annexés.

Sur ces dessins :
- la Figure 1 montre comment est relié un ordinateur aux différentes mémoires à disques et dérouleurs de bandes connectés à la liaison de type SCSI , par l'intermédiaire du système de transmission de données selon l'invention,
- la Figure 2 montre les différents éléments structurels d'un système de transmission de données entre un bus d'ordinateur et un réseau par exemple de type SCSI, dont le dispositif universel de couplage est décrit dans la demande 91 08908 précitée.
- la Figure 3 rappelle la constitution du système d'exploitation du système de transmission de données selon l'invention telle qu'elle est décrite dans la demande 91 08907 précitée.
- la Figure 4 montre quelle est la structure de l'application mise en oeuvre dans le système de transmission de données selon l'invention.
- la Figure 5 montre comment sont réparties les informations et les commandes dans les mémoires vidéo-RAM et SRAM du dispositif universel de couplage appartenant au système de transmission de données selon l'invention.
- la Figure 6 montre comment est structuré un élément définissant les différentes composantes relatives à une commande à exécuter par l'une des unités de stockage du réseau SCSI, élément mémorisé dans la mémoire SRAM.
- la Figure 7 montre comment s'échangent les commandes entre les différents processus appartenant à l'application du système de transmission de données selon l'invention,
- la Figure 8 est un organigramme définissant les principales opérations mises en oeuvre par l'application appartenant au système de transmission de données selon l'invention,

On se reporte à la figure 2 et on considère le dispositif adaptateur DEA qui est disposé entre le dispositif universel de couplage GPU et l'un et l'autre des deux bus BD₁ et BD₂.

Le dispositif adaptateur DEA comprend un premier et un second microprocesseur d'entrée/sortie, à savoir CTR₁ et CTR₂ qu'on peut également considérer comme des contrôleurs de bus SCSI. Chacun de ces microprocesseurs d'entrée/sortie est connecté d'une part au bus de données B₁ et d'autre part au bus d'adresse BAD. Par ailleurs, chacun de ces deux microprocesseurs est physiquement relié respectivement à BD₁ et BD₂ par l'intermédiaire des interfaces IF₁ et IF₂ dont le rôle est d'adapter le niveau des signaux électriques délivrés par les microprocesseurs CTR₁ et CTR₂, au niveau des signaux électriques utilisés sur les bus BD₁ et BD₂ tels qu'ils sont définis par la norme SCSI. Par ailleurs, les deux interfaces physiques IF₁ et IF₂ ont des rôles de régénération des signaux provenant soit de CTR₁ et CTR₂, soit de BD₁ et BD₂ avant de les transmettre vers les deux premiers ou vers les deux seconds.

Les deux microprocesseurs d'entrée/sortie sont, dans l'exemple de réalisation décrits ici, des microprocesseurs de type NCR53C700 fabriqués par la firme NCR. Ils exécutent un code qui leur est propre, appelé code SCRIPT.

Celui-ci est un programme spécifique d'entrée/sortie réalisé dans un langage SCRIPT conçu par la Société NCR, pour la gestion des entrées/sorties conforme à la norme SCSI.

Ce code est inscrit en mémoire SRAM, à l'initialisation du système MSP₁ (MSP₂) et est ensuite réecrit en mémoire VRAM par GPOS (ce code étant alors considéré par ce dernier comme des données utiles) autant de fois qu'il y a d'unités de stockage de données (mémoires à disques ou dérouleurs de bandes) associées aux bus BD₁ et BD₂. Le code SCRIPT est en fait constitué d'une suite de commandes compréhensibles uniquement par CTR₁ et CTR₂ et qui permettent l'envoi de commandes à exécuter par toute unité de stockage déterminée et des données correspondantes, le transfert physique de ces commandes et données étant effectué, conformément au protocole SCSI par CTR₁ et CTR₂. Ceux-ci, de fait, sont esclaves du microprocesseur central CPU, lorsque ce dernier met en oeuvre A₁ ou A₂. Dès que l'une ou l'autre de ces deux applications leur donne l'ordre de travailler, ils exécutent alors leur tâche de manière autonome.

Leur fonction est alors d'aller chercher les commandes et les données qui se situent dans la mémoire vidéo-RAM pour les envoyer vers les unités de mémoires à disques ou dérouleurs de bandes connectés à l'un ou l'autre des deux bus BD₁ et BD₂ et réciproquement.

On considère à nouveau la figure 3. Ainsi qu'il a été dit plus haut, chacune des applications A₁ et A₂ est chargée de transmettre l'ensemble des commandes constituant un programme d'exécution des commandes devant être effectuées par chacune des unités de mémoires à disques ou dérouleurs de bandes appartenant à l'un ou l'autre des deux systèmes SCSI₁ et SCSI₂. Un programme d'exécution de commandes est désigné sous le sigle CP, ce qui signifie Channel Program, en anglais.

Un tel programme d'exécution de commande est composé d'une entête ("header", en anglais) suivi d'une pluralité de commandes élémentaires qui sont désignées sous le sigle CCE, ce qui signifie Channel Comment entry, en anglais.

Une telle CCE peut signifier : il faut lire les données dans telle ou telle unité de mémoire de masse, ou bien il faut écrire des données dans celle-ci, tout en définissant le secteur de la mémoire où ces données doivent être lues ou écrites, etc...

Autrement dit, un programme d'exécution de commandes ou Channel Programm CP est constitué de l'ensemble des commandes CCE destinées à un type d'accès particulier à une unité de mémoire donnée. Ainsi, si l'application A1 (ou A2) est associée à n unités de stockage de données (mémoires à disques ou dérouleurs), à chacune de ces unités correspondent m accès possibles, un Channel Programm correspondant à chacun de ces accès. Si l'on définit un Channel Program relatif à une unité de mémoire à disque par exemple, il y aura m "channel Programm", ou encore m CPⱼ ou j = 1,2,3,m. A chacun de ces Channel Programm CPⱼ correspond p commandes CCE.

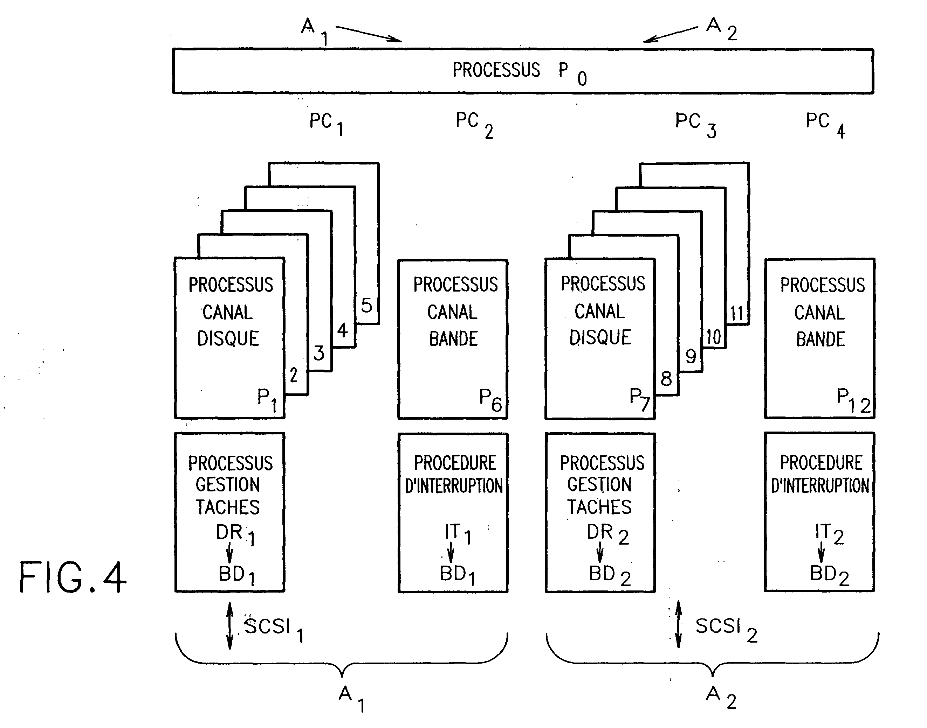

On considère la figure 4 qui montre la structure interne de l'une ou l'autre des applications A₁ et A₂. Ces deux applications ont un processus d'initialisation commun, à savoir P₀.

La première application A₁ traite les problèmes relatifs à deux canaux physiques virtuels PC₁ et PC₂, alors que l'application A₂ traite les problèmes relatifs à deux autres canaux physiques virtuels PC₃ et PC₄. Les canaux PC₁ et PC₂ concernent respectivement les mémoires à disques D₁ à D₅ et le dérouleur de bandes D₆. Les deux canaux PC₃ et PC₄ concernent respectivement les mémoires à disques D₇ à D₁₁ et le dérouleur de bandes D₁₂. Les deux canaux PC₁ et PC₂ sont ceux du bus BD₁ associé à SCSI₁ alors que les deux canaux PC₃ et PC₄ sont ceux du bus BD₂.

L'ordinateur ORD voit quatre canaux physiques différents PC₁ à PC4, alors que MSP₁ (ou MSP2) ignore leur existence et considère qu'il y a quatre canaux virtuels.

A un même canal virtuel correspond un ou plusieurs processus associés chacun à une unité de stockage de données déterminée, que ce soit une mémoire à disques ou un dérouleur de bandes. Ainsi, le canal PC₁ est associé à cinq processus, encore appelés canaux logiques, P₁ à P₅ associés respectivement aux mémoires à disques D₁ à D₅. Le canal PC₂ est associé à un seul processus ou canal logique, à savoir P₆ associé au dérouleur de bandes T₆. De même le canal PC₃ est associé aux cinq processus P₇ à P₁₁ eux-mêmes associés aux mémoires à disques D₇ à D₁₁ alors que le canal PC₄ est associé au processus P₁₂ lui-même associé au dérouleur de bandes T₁₂.

Il est clair que les processus P₁ à P₅ et P₆ appartiennent à l'application A₁, tandis que les processus P₇ à P₁₁ et P₁₂ appartiennent à l'application A₂.

Tous les processus précédemment cités sont indépendants et autonomes les uns vis à vis des autres.

L'application A1 (A2) comporte également un processus DR1 de gestion des tâches qui sont accomplies par les mémoires à disques et dérouleurs de bandes connectés au bus BD1. Elle comprend également une procédure d'interruption IT1 (IT2) destinée à gérer chacune des interruptions émises par CTR₁ (CTR₂) définies en des endroits spécifiques de son code SCRIPT. Elle peut également être mise en oeuvre dès qu'une erreur relative à l'exécution du protocole SCSI est détectée par CTR₁ (CTR₂), lorsque les unités de stockage connectées à BD₁ (BD₂) sont en train de traiter des commandes qui leur ont été envoyées par le système de traitement de données selon l'invention.

De même, l'application A₂ comprend le processus de gestion de tâches DR₂, et la procédure d'interruption IT₂, ce processus et cette procédure traitant les événements qui surviennent sur le bus BD₂.

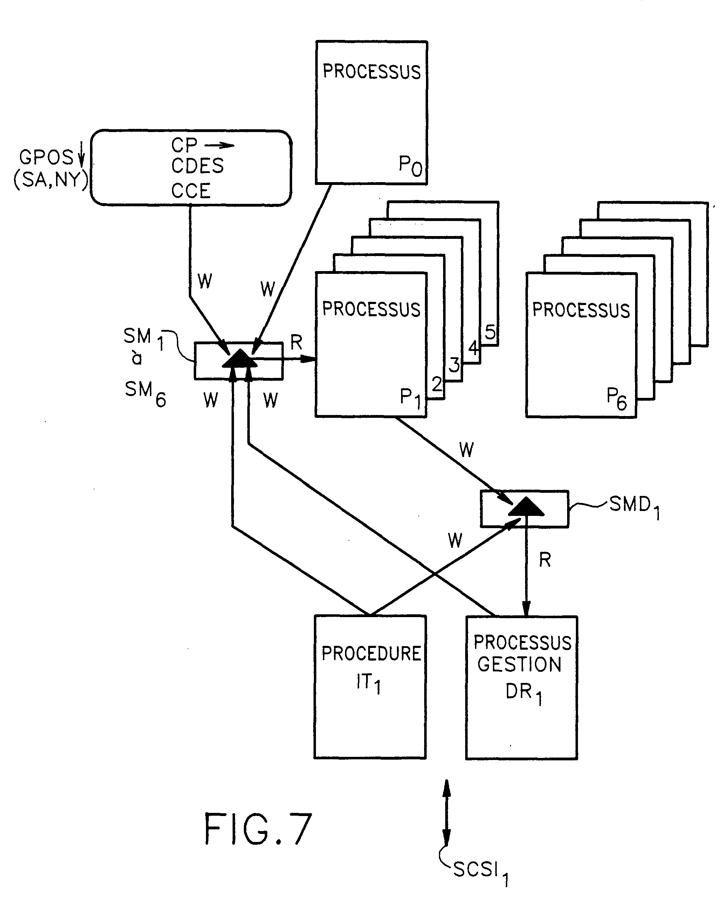

Ainsi qu'on peut mieux le voir à la figure 7, le système d'exploitation GPOS ( par l'intermédiaire soit de son noyau NY, soit par son serveur SA) transmet une pluralité de programmes de commandes CPj comprenant chacun une pluralité de commandes CCE. Pour chaque programmme CPj, les commandes sont transmises au processus qui doit les traiter, (par exemple l'un des processus P₁ à P₅ ou P₆) par l'intermédiaire de l'un des sémaphores à messages SM₁ à SM₆ (chacun de ceux-ci est associée à un processus). On dit également que ces commandes sont postées dans ce sémaphore, Après avoir été postées dans celui-ci, le processus qui doit les traiter vient les y chercher, les interprète et effectue leur transformation de manière à ce qu'elle soient conformes à la norme SCSI. On peut donc dire que chacun des processus P₁ à P₆ (il est bien évident qu'il en serait de même pour les processus P₇ à P₁₂) assure la transformation des commandes CCE qui lui sont envoyées par le système d'exploitation GPOS ( et qui proviennent donc de l'ordinateur ORD) en commandes conforme aux protocoles écrites dans le langage SCSI connu de chacune des unités de stockage de données connectées au bus BD₁. Cette transformation est effectuée en mémoire VRAM qui contient des tables de correspondance entre commandes CCE et commandes SCSI.

Une fois cette transformation des commandes en langage SCSI effectuée par le processus, celui-ci les transmet au gestionnaire DR₁ en les postant dans un sémaphore à messages associé à ce dernier, à savoir SMD₁. Le gestionnaire DR₁ met à jour le code SCRIPT de l'unité de stockage qu'on cherche à faire travailler, en mémoire VRAM, ceci étant possible du fait que, dans le sémaphore, sont contenus le numéro d'identification de l'unité de stockage et le pointeur de la table SCRIPT correspondante en VRAM (voir plus loin).

On se réfère désormais à la figure 6. Celle-ci montre dans sa partie gauche une liste LS comprenant, dans l'exemple de réalisation décrit ici, 30 éléments E₁ à E₃₀ définissant chacun une tâche exécutée par CTR₁ (CTR₂) correspondant à la transmission de données et des commandes correspondantes vers ou depuis une unité de stockage déterminée. Bien entendu, avant que cette tâche ne soit à exécuter, cet élément est vide. Ces 30 éléments E₁ à E₃₀ sont chaînés entre eux. Cette liste LS est située dans la mémoire SRAM. A tout moment, cette liste comprend des éléments libres et des éléments actifs lesquels contiennent des informations correspondant à une tâche précise devant être exécutée par CTR₁ (CTR₂).

A cette liste LS correspond une pluralité de pointeurs permettant de localiser chacun des éléments d'une liste qu'ils soient libres ou actifs. Il existe donc pour chaque élément libre de la liste un pointeur de début et un pointeur de fin, par exemple les pointeurs PL₁ et PL₂ de l'élément E₁ supposé libre à la figure 6. De même, pour tout élément actif, il existe un pointeur de début et un pointeur de fin, par exemple, les pointeurs PL₂ et PL₃ pour l'élément E₂ supposé actif à la figure 6. De même, l'élément actif Eₖ comprend les pointeurs PLₖ et PLₖ₊₁. Tous les pointeurs des éléments actifs sont chaînés entre eux. En outre la liste LS comprend un pointeur qui correspond au début de l'élément actif en train de travailler, ce qui signifie que les commandes qui y sont définies sont exécutées par CTR₁ (CTR₂). Ainsi, par exemple, si l'élément Eₖ est en train de travailler, le pointeur correspondant définissant l'élément actif travaillant est bien évidemment le pointeur PLₖ.

Chaque élément d'une liste comprend 11 lignes L₁ à L₁₁, chaque ligne comportant 4 octets O₁,O₂,O₃,O₄. Ceci est visible sur la partie droite de la figure 6.

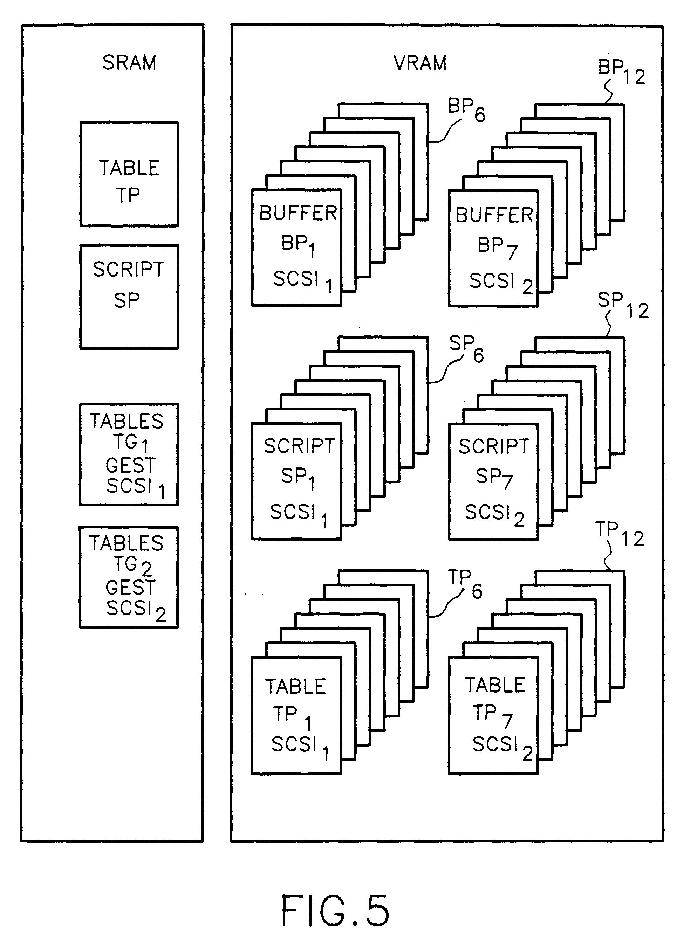

Le détail de la composition de chacune des lignes L₁ à L₁₁ est le suivant :
- La ligne L₁ donne, pour chaque octet, les informations suivantes : O₁ indique si l'élément considéré est ou non actif. Ici un élément non actif correspond à un octet de valeur nulle, alors qu'un élément actif correspond à un octet ayant la valeur 1.
   l'octet O₂ indique l'adresse du périphérique sur le bus BD₁ (BD₂). Outre les 6 périphériques qui peuvent être connectés sur le bus BD₁, on peut connecter les deux gestionnaires de tâches DR₁ et DR₂. Il y a donc 8 adresses possibles pour un bus de type SCSI déterminé. L'octet O₂ indiquera une adresse-comprise entre 2 et 7 (les adresses 0 et 1 sont réservées à DR₁ et DR₂).
   L'octet O₃ indique l'état de la commande SCSI en train d'être exécutée par CTR₁ correspondant à l'élément considéré. Cette commande peut être en attente, active, traitée, lancée, terminée, avortée ou en erreur.
   L'octet O₄ n'est pas utilisé.
- La ligne L₂ indique la valeur du pointeur sur l'élément actif qui précède immédiatement l'élément en train de travailler (on rappelle que tous les éléments actifs sont chaînés les uns aux autres).
- La ligne L₃ indique la valeur du pointeur sur l'élément actif suivant immédiatement celui qui est en train de travailler.
- La ligne L₄ définit pour chacun de ses octets O₁ à O₄ un certain nombre d'informations.
   L'octet O₁ indique le code de la commande ( s'il s'agit d'une commande d'écriture, de lecture, de sauvetage, etc...).
   L'octet O₂ indique s'il s'agit d'un message simple. A savoir, avorter la commande en cours ou remise à l'état initial de l'unité de stockage.
   L'octet O₃ indique s'il s'agit d'un message étendu : il peut s'agir par exemple de la négociation de la vitesse de transfert sur le bus BD₁.
   Les messages simples ou étendus dont il est question dans O₂ et O₃ sont définis par la norme SCSI.
   L'octet O₄ indique si une erreur a été détecté par le gestionnaire de tâches correspondant DR₁ ou DR₂ (il y a dans l'exemple de réalisation décrit ici, 10 erreurs recensées possibles).
- La ligne L₅ indique la valeur du pointeur sur la table correspondant à l'unité de stockage de données à laquelle est destinée la commande, table se trouvant en mémoire SRAM (cette table sera définie plus loin, en relation avec la figure 5).
- La ligne L₆ indique la valeur du pointeur de la table correspondant à l'unité de stockage de données en train de travailler, table se trouvant en mémoire VRAM (cette table est également définie plus loin en relation avec la figure 5).
- La ligne L₇ indique la valeur du pointeur sur la commande à exécuter par le microprocesseur CTR₁. C'est la commande que ce microprocesseur doit envoyer à l'unité de stockage, cette commande se trouvant définie dans la mémoire VRAM : c'est le processus P₁ à P₆ associé à l'unité de stockage devant exécuter la commande, qui construit et place cette commande en mémoire VRAM.
- La ligne L₈ indique l'adresse en mémoire VRAM, à laquelle le microprocesseur CTR₁ doit aller chercher ses instructions pour exécuter le code SCRIPT lui permettant d'aller chercher la commande et les données correspondantes.
- La ligne L₉ indique l'heure du début de la commande à exécuter.
- La ligne L₁₀ indique l'heure de fin de l'exécution de la commande, si celle-ci a été exécutée.
- La ligne L₁₁ définit la dernière interruption reçue pour cette commande (interruption faite par le microprocesseur CTR₁).

On considère la figure 5 qui montre quelles sont les différentes données qui sont nécessaires pour que l'une ou l'autre des applications A₁ ou A₂ puissent tourner, ainsi que la façon dont elles sont localisées soit dans VRAM soit dans SRAM.

La mémoire. VRAM comprend une pluralité de zones mémoire, souvent désignées sous le nom de buffer, selon la terminologie anglo-saxonne, où doivent être stockées les données destinées à être transférées vers les unités de stockage de la mémoire de masse SCSI₁ ou provenant de celles-ci. Ainsi, aux unités de stockage de données D₁ à D₅ et T₆ correspondent les buffers BP₁ à BP₆. De même, aux mémoires à disques D₇ à D₁₁ et au dérouleur de bande T₁₂ correspondent les buffers BP₇ à BP₁₂.

Le code SCRIPT des contrôleurs CTR₁ et CTR₂ est inscrit dans la mémoire VRAM autant de fois qu'il y a d'unités de stockage de données. Ainsi, il y a donc 12 zones mémoire de VRAM réservées à ce code SCRIPT. Ces zones mémoire sont respectivement désignées par SP₁ à SP₁₂, les zones SP₁ à SP₆ correspondant à la mémoire de masse SCSI1, alors que les zones SP₇ à SP₁₂ correspondent à la mémoire de masse SCSI₂.

On rappelle que le code SCRIPT est également inscrit, une seule fois, dans la mémoire SRAM, dans une zone spéciale de celle-ci, désignée par SP.

A chacun des processus P₁ à P₆ d'une part, P₇ à P₁₂ d'autre part correspondent des tables respectivement TP₁ à TP₆, TP₇ à TP₁₂. Ces tables comprennent un certain nombre d'informations permettant au gestionnaire de tâches de travailler. Ces informations sont par exemple l'adresse du buffer où sont stockées les données à transmettre soit vers l'ordinateur ORD, soit vers l'unité de stockage de données correspondante. Ainsi, dans la table TP₁ est indiquée l'adresse du buffer BP₁ où sont stockées les données destinées à la mémoire à disques D₁, quand celle-ci doit travailler. Par ailleurs, cette table TP₁ comprend la longueur des informations à transmettre, ainsi que des paramètres spécifiques à certaines commandes.

La table correspondant à l'unité de stockage de données qui est en train de travailler, supposée ici être par exemple TP₁, est recopiée dans la mémoire SRAM, dans la table TP ainsi qu'on peut le voir en haut de la figure 5 à gauche. Cette recopie a lieu pour permettre à CTR₁ (CTR₂) sa mise à jour lors de chaque opération d'entrée/sortie. En effet, par construction CTR₁ (CTR₂) ne peut accéder à la mémoire SRAM. Cette table est, par ailleurs, utilisée pour l'envoi de paramètres spéciaux par CTR₁ relatifs à des commandes spécifiques propres au protocole SCSI (par exemple, lors de l'initialisation de l'unité de stockage correspondant à TP₁). A la fin de toute opération d'entrée/sortie, la table mise à jour, est recopiée en SRAM, ce qui permet à P₁ d'avoir un compte-rendu de l'opération d'entrée/sortie. Il est en effet important d'éviter que P₁ n'aille chercher celui-ci en VRAM, ce qui interromprait le travail de CTR₁ et le perturberait : CPU doit éviter d'aller travailler en VRAM, car cela ralentit le transfert des données vers BD₁.

Par ailleurs, sont inscrites en mémoire SRAM des tables TG₁ et TG₂ associées respectivement aux gestionnaires de tâche DR₁ et DR₂. Ces tables comprennent les adresses des différentes tables TP₁ à TP₁₂ correspondant aux différentes unités de stockage en train de travailler.

On se reporte désormais aux figures 5 à 8 permettant de comprendre la succession des opérations définissant le fonctionnement d'une application A₁ ou A₂. On suppose, par exemple, qu'il s'agit d'écrire des informations dans un secteur déterminé d'un disque déterminé de la mémoire à disque D₁. Le processus de l'application A₁ qui va être mis en oeuvre est donc le processus P₁, le gestionnaire de tâche étant DR₁ et la procédure d'interruption IT₁.

Il convient de préciser que, à chacun des processus P₁ à P₆ correspondent respectivement les sémaphores SM₁ à SM₆ et qu'au gestionnaire DR₁ correspond le sémaphore SMD₁. Chacun des processus P₁ à P₆ et DR₁ peut aller écrire (symbole W à la figure 7) dans les sémaphores associés (SM₁ à SM₆ et SMD₁) aux autres mais ne peut que lire son propre sémaphore associé (symbole R à la figure 7).

On suppose bien entendu que la carte portant tous les éléments de MSP₁, a été initialisée et que le système d'exploitation GPOS est en train de tourner, l'application A1 étant également en train de tourner. Ce qui signifie que le processus P₀ a effectué son travail d'initialisation et que l'application se trouve dans l'état E₂.

On suppose également que le bus BD₁ et l'ensemble des unités de stockage de données ont été initialisés, en particulier la mémoire à disques D₁. On cherche donc à faire exécuter une série de commandes CCE d'un programme de commandes (CP) relatives à l'écriture d'un bloc de données dans un secteur déterminé de la mémoire à disques D₁.

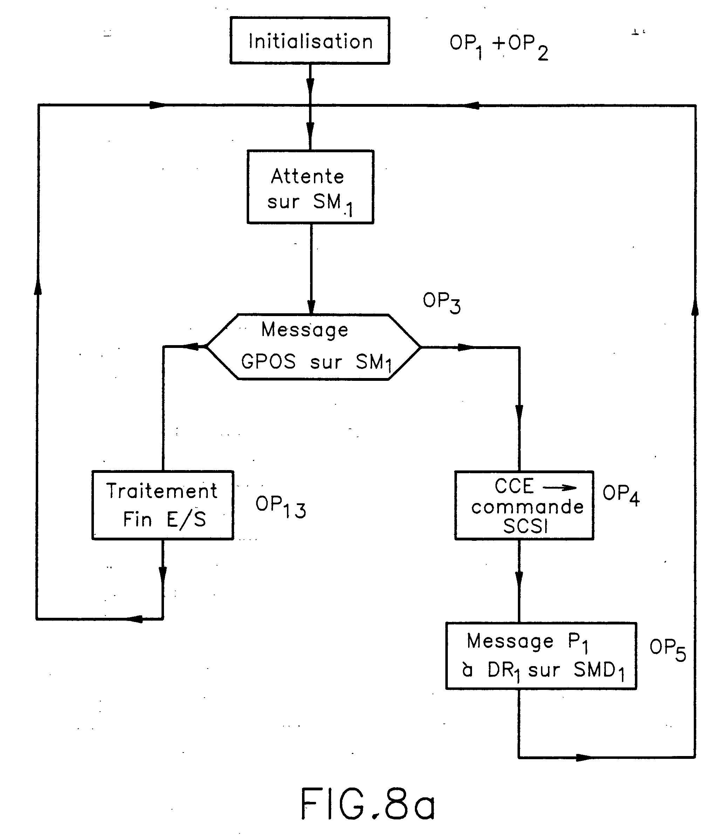

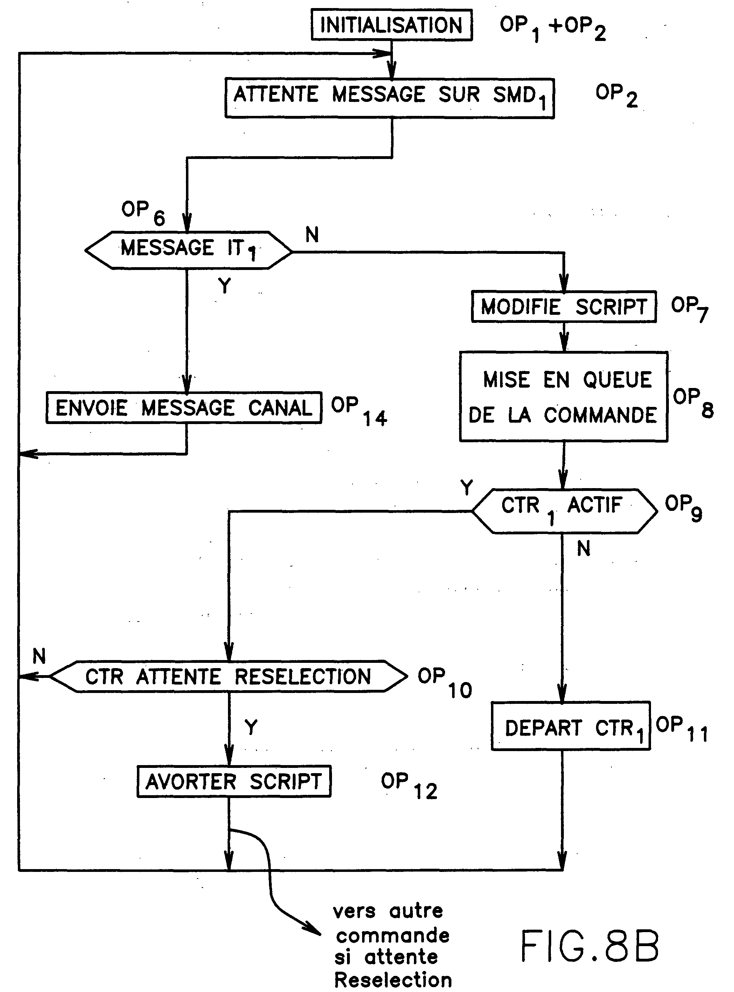

La succession des opérations est alors la suivante, la figure 8A étant relative aux opérations accomplies par P₁ et la figure 8B à celles accomplies par DR₁.
- opération OP₁ : on suppose donc que le processus P₀ a initialisé tous les processus P₁ à P₆, ainsi que le gestionnaire de tâches DR₁ et la procédure d'interruption IT₁. Une fois ceci effectué, le processus P₁ initialise l'ensemble de ses tables, y compris la table TP₁. Le gestionnaire de tâches DR₁ initialise sa table TG₁.
- Opération OP₂. Le processus P₁ va voir s'il y a bien une unité de stockage de donnée là où on lui a dit d'aller travailler. P₁ va ensuite regarder de quel type d'unité il s'agit. Une fois que ceci est effectué, il va réinitialiser celle-ci. Le processus P₁ et le gestionnaire de tâches DR₁ se mettent dans la position "attente sur sémaphore", P₁ sur SM₁, DR₁ sur le sémaphore SMD₁.

On suppose donc que l'ordinateur ORD a envoyé via le bus PSB un programme d'exécution de commande (Channel Programm) au système d'exploitation GPOS : en fait, c'est ce dernier qui sur une interruption qui lui est envoyée par le système d'exploitation de l'ordinateur ORD, va chercher dans la mémoire centrale de ce dernier, les informations nécessaires pour l'exécution d'une commande d'entrée/sortie. GPOS va alors transférer les données utiles dans la mémoire VRAM et les inscrire dans le buffer BP₁, alors que le Channel Programm, muni de toutes ses commandes CCE va être inscrit dans la mémoire SRAM.

On passe ensuite à l'opération OP₃
- Opération OP₃. Le système d'exploitation GPOS met un message dans le sémaphore SM₁, dès qu'il reçoit l'information d'entête (header) du programme d'exécution de commandes. Ce message est destiné à P₁.

On passe à OP₄.

OP₄ : Ce dernier va alors chercher les CCE nécessaires, en mémoire SRAM (GPOS lui a indiqué où il faut aller chercher ces commandes CCE en mémoire SRAM, lors du postage du message dans SM₀), afin de reconstruire selon la norme SCSI, un ensemble de commandes compréhensibles par l'unité de stockage de données D₁. P₁ effectue donc à ce moment là la transformation du protocole utilisé entre ORD et GPOS pour la transmission des commandes, en protocole SCSI. P₁ va alors mettre à jour en mémoire VRAM la table TP₁ correspondant à cette unité de stockage de données, et inscrire d'une part l'adresse où les informations doivent être écrites sur le disque choisi à cet effet, ainsi que leur longueur. Il met également à jour l'adresse du buffer de données en mémoire VRAM où sont provisoirement stockées celles-ci avant leur transfert vers la mémoire à disques D₁.

Opération OP₅ : le processus P₁ met alors un message dans le sémaphore SMD₁ dans lequel il met le numéro de l'unité de mémoire à disques où l'on désire effectuer le transfert de données et également l'adresse en mémoire VRAM où se trouve la commande. Tout processus tel que P₁ n'envoie, vers DR₁ et son unité de stockage associée, qu'une seule commande à la fois même s'il y a besoin d'effectuer plusieurs commandes correspondant à un même channel Program CP. Ces commandes sont donc envoyées les unes après les autres. Le processus P₁ met également dans le sémaphore SM₁ l'adresse de la table TP₁. P₁ est alors en l'état d'attente sur le sémaphore SM₁. GPOS donne la main à DR₁ (fig. 8B).

On passe en OP₆.

OP₆ : A la fin de cette opération OP₅, P₁ vérifie si l'on ne reçoit pas dans le sémaphore SM₁ une interruption de la part de la procédure d'interruption IT₁. Si cela est le cas, on passe à l'opération OP₁₁ (voir plus loin), si cela n'est pas le cas, on passe à l'opération OP₇.

OP₇ : Pendant ce temps, le gestionnaire de tâches DR₁ analyse le message contenu dans SMD₁ et met alors à jour le code SCRIPT de l'unité de stockage de données considérée, à savoir ici D₁ (adresse de buffer, longueur). En fait, dans le message posté dans SMD₁, est contenu le pointeur de la table TP₁ dans la mémoire SRAM. Ce dernier permet d'obtenir le pointeur de la table équivalente dans la mémoire VRAM et le pointeur sur la commande à exécuter.

On passe alors à l'opération suivante OP₈.
- Opération OP₈. Dès que la mise à jour précédente est faite, le gestionnaire de tâches DR₁ remplit l'élément de LS correspondant contenant les informations sur la commande à exécuter. Dès que ceci est fait, l'opération de transfert des données contenues en mémoire VRAM vers la mémoire à disques D₁ peut commencer.

OP₉ : on s'assure alors que le contrôleur CTR₁ ne fait rien. Si cela est le cas, on passe à l'opération OP₁₀ sinon on passe à l'opération OP₁₁·
- Opération OP₁₁ : le contrôleur CTR₁ exécute son code SCRIPT (en SP₁) ce qui lui permet de faire son travail de transfert de données, à partir de l'adresse de départ du code SCRIPT donnée par le gestionnaire de tâches DR₁. Ce dernier met alors à jour le pointeur sur l'élément actif et, se remet en attente sur le sémaphore SMD₁ (OP₂) alors que le contrôleur CTR₁ continue à tourner et à gérer les différentes phases prévues par la norme SCSI pour transférer les données sur le bus BD₁ vers la mémoire à disques D₁. CTR₁ continue à tourner jusqu'à ce qu'il trouve une instruction d'interruption dans le code SCRIPT en SP₁. A ce moment là, le système d'exploitation GPOS branche directement la procédure d'interruption IT₁ qui gère le contrôleur CTR₁. Trois cas sont alors possibles :

### A) Cas simple :

Dans ce cas, le contrôleur CTR₁, le bus BD₁ étant libre, exécute la commande qu'on lui a demandé d'exécuter et génère une interruption, signifiant fin d'entrée/sortie lorsque son travail est terminé. Cette interruption signifie que tout s'est exécuté sans erreur : les données contenues dans le buffer BP₁ ont été transférées sur le disque et y ont été écrites : la procédure d'interruption qui se met en route est telle qu' on lit d'abord dans le contrôleur CTR₁ la valeur de l'interruption, ç'est à dire sa nature : la procédure voyant qu'il s'agit d'une fin d'entrée/sortie met à jour le status dans l'élément actif de la liste (octet O₃ de la ligne L₁) et modifie la ligne L₁₁. En L₁, le champ est mis à 0 (octet 0₁) et le pointeur élément actif passe à 0. Alors la procédure d'interruption IT₁ envoie un message à P₁, via SM₁ indiquant que tout est fini et s'est bien passé. Parallèlement cette même procédure IT₁ s'arrête en envoyant un message à GPOS via SM₁. En réponse à ce message, P₁ voyant qu'il ne s'agit pas d'un message de GPOS, passe à l'opération OP₁₃.

OP₁₃ : P₁ envoie à ORD un compte-rendu d'entrée/sortie et transfère les données vers ORD, avec l'appui de GPOS. P₁ retourne en "attente sur sémaphore SM₁" (OP₂)

### B) Cas complexe :

Ce cas concerne les circonstances où l'unité de mémoire à disques s'est déconnectée volontairement du bus BD₁, pour effectuer les opérations d'écrire ou de lecture qu'on lui a demandé. On rappelle que cette façon de procéder est définie par la norme SCSI. Lorsque la mémoire à disques D₁ se déconnecte, elle envoie une interruption sur le bus BD₁ qui réveille la procédure d'interruption IT₁. Celle-ci lit qu'il y a déconnexion et met alors à jour l'élément actif (ligne L₁, status modifié) et l'adresse de départ du code SCRIPT. L'interruption envoyée par la mémoire à disques D₁ signifie : "il y a déconnexion de D1". La procédure IT₁ regarde alors dans la liste LS s'il y a d'autres commandes à exécuter par le contrôleur CTR₁. S'il n'y a pas de commande à exécuter, on remet le contrôleur CTR₁ en attente de reconnexion. Si la réponse à la question précédente est oui, cela signifie qu'il y a une autre commandé à effectuer pour un autre processus (P₂ à P₆), (cette commande est effectuée par la procédure d'interruption IT₁). On met à jour le pointeur élément actif sur une nouvelle commande à exécuter par le contrôleur CTR₁ : on prend une nouvelle adresse de code SCRIPT et CTR₁ part pour l'exécution de celle-ci, et IT₁ se termine.

Au cas où la mémoire à disques D₁ se reconnecte, CTR₁ reprend l'exécution de son code et on est ramené au début du cas simple A.

Il existe en outre un troisième et quatrième cas qui sont appelés respectivement cas intermédiaire et cas particulier.

### C) Cas intermédiaire :

C'est le cas où le contrôleur CTR₁ est en attente de resélection de la part de la mémoire à disques D₁. Dans ce cas, on suppose qu'une autre commande correspondant à un autre processus P₂, par exemple, peut être exécutée par l'unité de stockage de données correspondant à ce processus. Ce dernier exécute alors les opérations OP₃ à OP₅. Pour le processus P₁, cela correspond à l'opération OP₁₀ où on fait avorter le code SCRIPT qui est arrêté sur une instruction d'attente de reconnexion (instruction interne au code SCRIPT). DR₁ exécute les opérations OP₆ à OP₉. CTR₁ étant actif, on passe en OP₁₀ où on vérifie qu'il est en "attente de resélection" : si la réponse est oui (Symbole Y), on avorte le code SCRIPT, et on repasse en OP₂. Si la réponse est non (symbole N), on repasse directement en OP₂. Lors de l'avortement du code SCRIPT (OP₁₀), la procédure IT₁ est réveillée et le processus P₂ effectue la commande qui lui est demandée (voir fin cas complexe).

### D) Cas particulier :

La procédure IT₁ est réveillée par un incident détecté par CTR₁. Elle construit alors un message pour DR₁ contenant un compte rendu de l'incident, et se termine par cet envoi.

DR₁ est réveillé par ce message et accomplit l'opération OP₆ puis OP₁₄.

OP₁₄ : DR₁ met à jour ces tables et la liste LS et envoie un message au processus concerné (P₁,P₂,....) et repasse en OP₂.

## Revendications

1. Système de transmission de données (MSP₁, MSP₂) entre un bus d'ordinateur (PSB) et une mémoire de masse (SCSI₁, SCSI₂) comportant une pluralité d'unités de stockage de données (D₁ à D₅, T₆, D₇ à D₁₁, T₁₂) reliées entre elles par une liaison spécifique (BD₁,BD₂) à laquelle le système est physiquement relié, comprenant :
- un microprocesseur central (CPU) relié à au moins une mémoire (SRAM) contenant un système d'exploitation (GPOS) destiné à être exécuté par celui-ci,
- des moyens de transfert des trames (MPC, B₂, B₃, VRAM, B₁, DMAC, CTR₁, CTR₂) depuis le bus d'ordinateur vers la liaison et réciproquement, dont le travail est organisé et géré par le microprocesseur, comprenant une mémoire (VRAM) de stockage de données disposée entre le bus et la liaison,
- le système d'exploitation (GPOS) étant associé à au moins une application (A₁, A₂) spécifique de la transmission de données entre le bus (PSB) et la dite liaison (BD₁, BD₂),
caractérisé en ce que, il comporte
- au moins un microprocesseur d'entrée/sortie (CTR₁, CTR₂), esclave du processeur central (CPU), relié d'une part à la dite mémoire et d'autre part à la dite liaison, l'application comprenant :
- un processus d'initialisation (P₀) de l'ensemble de l'application,
- une pluralité de processus d'adaptation distincts et indépendants les uns des autres (P₁ à P₆, P₇ à P₁₂) dont chacun est associé à une unité de stockage d'un type déterminé,
- au moins un processus gestionnaire de tâches (DR₁, DR₂),
les différents processus communiquant entre eux par sémaphore à message, chacun des processus d'adaptation réalisant la transformation et l'adaptation des commandes provenant de l'ordinateur (ORD) destinées à l'unité de stockage correspondante en commandes conformes au protocole utilisé sur la liaison spécifique, le processus gestionnaire autorisant le microprocesseur d'entrée/sortie à transférer physiquement les commandes et les données des trames correspondant à celles-ci depuis la mémoire vers la liaison et réciproquement, dès que le processus d'adaptation correspondant a terminé la dite adaptation.

2. Système de transmission de données selon la revendication 1, caractérisé en ce que les processus d'adaptation (P₁ à P₆, P₇ à P₁₂) et le processus gestionnaire (DR₁, DR₂) sont associés chacun à au moins un sémaphore à message (SM₁ à SM₆, SMD₁), chacun de ces processus pouvant lire dans son sémaphore associé et écrire dans les autres.

3. Système selon l'une quelconque des revendications 1,2 caractérisé en ce que un programme d'entrée/sortie de données vers ou depuis la liaison est associé au microprocesseur d'entrée/sortie, et est inscrit d'une part dans une zone spéciale (SP) de la mémoire (SRAM) reliée au microprocesseur central, et d'autre part dans la dite mémoire de stockage, autant de fois qu'il y a de processus d'adaptation, dans des premières zones mémoire réservées à cet effet (SP₁ à SP₁₂).

4. Système selon l'une quelconque des revendications 1,2,3 caractérisé en ce que la mémoire de stockage (VRAM) comprend des secondes zones mémoire (BP₁ à BP₁₂) affectées chacune au stockage des données destinées à chacune des différentes unités de stockage, et des tables (TP₁ à TP₁₂) associées chacune à l'une déterminée de celles-ci comprenant l'adresse de la seconde zone mémoire associée à la même unité et la longueur des données utiles qui y sont mémorisées.

5. Système suivant la revendication 4 caractérisé en ce que le contenu de la table correspondant à l'unité de stockage en train de travailler est recopié dans une table (TP) correspondante dans la mémoire (SRAM) associée au microprocesseur central (CPU).

6. Système selon l'une quelconque des revendications 1 à 5, caractérisé en ce que la mémoire associée au microprocesseur central comprend une liste (LS) comprenant une pluralité d'éléments (E₁ à E₃₀) définissant chacun une tâche exécutée par le microprocesseur d'entrée/sortie correspondant à la transmission de données et des commandes correspondantes vers ou depuis une unité de stockage déterminée.

7. Système suivant la revendication 2 caractérisé en ce qu'il comprend, en outre au moins une procédure d'interruption (IT₁, IT₂) destinée à gérer chacune des interruptions générées par le microprocesseur (CTR₁, CTR₂) d'entrée/sortie définies en des endroits spécifiques de son programme d'entrée/sortie (SP₁ à SP₁₂).

## Claims

1. System for transmission of data (MSP₁, MSP₂) between a computer bus (PSB) and a bulk memory (SCSI₁, SCSI₂) comprising a plurality of data storage units (D₁ to D₅, T₆, D₇ to D₁₁, T₁₂) connected together by a specific link (BD₁, BD₂) to which the system is physically connected, comprising:
- a central microprocessor (CPU) connected to at least one memory (SRAM) containing an operating system (SRAM) containing an operating system (GPOS) intended to be executed thereby,
- means for transferring frames (MPC, B₂, B₃, VRAM, B₁, DMAC, CTR₁, CTR₂) from the computer bus to the link and vice versa, the work of which is organised and managed by the microprocessor, comprising a data storage memory (VRAM), arranged between the bus and the link,
- the operating system (GPOS) being associated with at least one specific application (A₁, A₂) for the transmission of data between the bus (PSB) and said link (BD₁, BD₂),
characterised in that it comprises
- at least one input/output microprocessor (CTR₁, CTR₂), slaved to the central processor (CPU), connected on the one hand to said memory and on the other hand to said link, the application comprising:
- a process (P₀) for initialisation of the application as a whole,
- a plurality of distinct adaptation processes independent of one another (P₁ to P₆, P₇ to P₁₂) each of which is associated with a storage unit of a particular type,
- at least one task manager process (DR₁, DR₂),
the various processes communicating between each other by message signalling, each of the adaptation processes performing the transformation and adaptation of the commands coming from the computer (ORD) and going to the corresponding storage unit into commands compliant with the protocol used on the specific link, the manager process authorising the input/output microprocessor to physically transfer the commands and data from the frames corresponding thereto from the memory to the link and vice versa, as soon as the corresponding adaptation process has finished said adaptation.

2. Data transmission system according to Claim 1, characterised in that the daptation processes (P₁ to P₆, P₇ to P₁₂) and the manager process (DR₁, DR₂) are each associated with a least one message signalling unit (SM₁ to SM₆, SMD₁), each of these processes being able to read from its associated signalling unit and write to the others.

3. System according to either one of Claims 1, 2, characterised in that a program for inputting/outputting data to or from the link is associated with the input/output microprocessor, and is entered on the one hand in a special zone (SP) of the memory (SRAM) connected to the central microprocessor, and on the other hand in said storage memory, as many times as there are adaptation processes, in the first memory zones reserved for that purpose (SP₁ to SP₁₂).

4. System according to any one of Claims 1, 2, 3, characterised in that the storage memory (VRAM) comprises second memory zones (BP₁ to BP₁₂) each assigned to the storage of data going to each of the various storage units, and tables (TP₁ to TP₁₂), each associated with the particular one that comprises the address of the second memory zone associated with the same unit and the length of the effective data that are stored there.

5. System according to Claim 4 characterised in that the content of the table corresponding to the storage unit currently working is copied over to a corresponding table (TP) in the memory (SRAM) associated with the central microprocessor (CPU).

6. System according to any one of Claims 1 to 5, characterised in that the memory associated with the central microprocessor comprises a list (LS) comprising a plurality of elements (E₁ to E₃₀) each defining a task executed by the input/output microprocessor corresponding to the transmission of data and the corresponding commands to or from a particular storage unit.

7. System according to Claim 2 characterised in that it further comprises at least one interrupt procedure (IT₁, IT₂) each intended to manage interrupts generated by the input/output microprocessor (CTR₁, CTR₂), said interrupts being defined at specific places in its input/output program (SP₁ to SP₁₂).

## Patentansprüche

1. System (MSP₁, MSP₂) zur Übertragung von Daten zwischen einem Rechnerbus (PSB) und einem Massenspeicher (SCSI₁, SCSI₂), der mehrere Datenspeichereinheiten (D₁ bis D₅, T₆, D₇ bis D₁₁, T₁₂) umfaßt, die über eine spezifische Verbindung (BD₁, BD₂), an die das System physisch angeschlossen ist, miteinander verbunden sind, mit:
- einem zentralen Mikroprozessor (CPU), der mit wenigstens einem Speicher (SRAM) verbunden ist, der ein Betriebssystem (GPOS) enthält, das von jenem ausgeführt werden soll,
- Mitteln (MPC, B₂, B₃, VRAM, B₁, DMAC, CTR₁, CTR₂) zur Übertragung von Rahmen vom Rechnerbus zu der Verbindung und umgekehrt, deren Operation durch den Mikroprozessor organisiert und gesteuert wird und die einen Datenspeicher (VRAM) enthalten, der zwischen dem Bus und der Verbindung angeordnet ist,
- wobei dem Betriebssystem (GPOS) wenigstens eine für die Datenübertragung zwischen dem Bus (PSB) und der Verbindung (BD₁, BD₂) spezifische Anwendung (A₁, A₂) zugeordnet ist,
dadurch gekennzeichnet, daß es umfaßt:
- wenigstens einen Eingangs/Ausgangs-Mikroprozessor (CTR₁, CTR₂), der ein Slave des Zentralprozessors (CPU) ist und einerseits an den Speicher und andererseits an die Verbindung angeschlossen ist, wobei die Anwendung umfaßt:
- einen Initialisierungsprozeß (P₀) für die gesamte Anwendung,
- mehrere verschiedene und voneinander unabhängige Adaptionsprozesse (P₁ bis P₆, P₇ bis P₁₂), wovon jedem eine Speichereinheit eines bestimmten Typs zugeordnet ist,
- wenigstens einen Task-Steuerprozeß (DR₁, DR₂),
wobei die verschiedenen Prozesse miteinander über einen Nachrichtensemaphor kommunizieren, wobei jeder der Adaptionsprozesse die Transformation und die Adaption von vom Rechner (ORD) stammenden Befehlen, die für die entsprechende Speichereinheit bestimmt sind, in Befehle, die mit dem in der spezifischen Verbindung verwendeten Protokoll konform sind, ausführt, wobei der Steuerprozeß dem Eingangs/Ausgangs-Mikroprozessor erlaubt, die Befehle und die Daten der ihnen entsprechenden Rahmen vom Speicher zur Verbindung und umgekehrt physisch zu übertragen, sobald der entsprechende Adaptionsprozeß die Adaption beendet hat.

2. Datenübertragungssystem nach Anspruch 1, dadurch gekennzeichnet, daß den Adaptionsprozessen (P₁ bis P₆, P₇ bis P₁₂) und dem Steuerprozeß (DR₁, DR₂) jeweils wenigstens ein Nachrichtensemaphor (SM₁ bis SM₆, SMD₁) zugeordnet ist, wobei jeder dieser Prozesse in seinem zugeordneten Semaphor lesen und in den anderen schreiben kann.

3. System nach einem der Ansprüche 1, 2, dadurch gekennzeichnet, daß dem Eingangs/Ausgangs-Mikroprozessor ein Programm zur Eingabe/Ausgabe von Daten in die Verbindung oder von der Verbindung zugeordnet ist und einerseits in eine spezielle Zone (SP) des mit dem zentralen Mikroprozessor verbundenen Speichers (SRAM) und andererseits sooft, wie Adaptionsprozesse vorhanden sind, in hierzu reservierte erste Speicherzonen (SP₁ bis SP₁₂) im Ablagespeicher geschrieben ist.

4. System nach einem der Ansprüche 1, 2, 3, dadurch gekennzeichnet, daß der Ablagespeicher (VRAM) zweite Speicherzonen (BP₁ bis BP₁₂), wovon jede der Speicherung von Daten zugewiesen ist, die für jede der verschiedenen Speichereinheiten bestimmt sind, sowie Tabellen (TP₁ bis TP₁₂) umfaßt, die jeweils einer bestimmten von ihnen zugeordnet sind und die Adresse der zweiten Speicherzone, die derselben Einheit zugeordnet ist, und die Länge der Nutzdaten, die hier gespeichert sind, enthalten.

5. System nach Anspruch 4, dadurch gekennzeichnet, daß der Inhalt der Tabelle, die der Speichereinheit entspricht, die momentan in Betrieb ist, in eine entsprechende Tabelle (TP) in dem dem zentralen Mikroprozessor (CPU) zugeordneten Speicher (SRAM) kopiert wird.

6. System nach einem der Ansprüche 1 bis 5, dadurch gekennzeichnet, daß der dem zentralen Mikroprozessor zugeordnete Speicher eine Liste (LS) enthält, die mehrere Elemente (E₁ bis E₃₀) umfaßt, die jeweils eine von dem Eingangs/Ausgangs-Mikroprozessor ausgeführte Task definieren, die der Übertragung von Daten und von entsprechenden Befehlen an die bestimmte und von der bestimmten Speichereinheit entspricht.

7. System nach Anspruch 2, dadurch gekennzeichnet, daß es außerdem wenigstens eine Unterbrechungsprozedur (IT₁, IT₂) umfaßt, die dazu bestimmt ist, jede der Unterbrechungen zu steuern, die vom Eingangs/Ausgangs-Mikroprozessor (CTR₁, CTR₂) erzeugt werden und an spezifischen Stellen seines Eingabe/Ausgabe-Programms (SP₁ bis SP₁₂) definiert sind.
